# DEMANDE DE BREVET EUROPEEN

(11) **EP 4 184 765 A1**
(43) Date de publication de la demande: **24.05.2023**
(21) Numéro de dépôt: 22207506.1
(22) Date de dépôt: 15.11.2022
(51) Int. Cl.: H02K 9/197, H02K 9/08, H02K 1/12, H02K 1/20, H02K 5/20, H02K 1/04, H02K 1/32, H02K 5/128, H02K 5/16, H02K 3/24, H02K 7/00

(54) **MACHINE ÉLECTRIQUE TOURNANTE REFROIDIE PAR UN LIQUIDE DE REFROIDISSEMENT**

(30) Priorité: 18.11.2021 FR 2112200
(71) Demandeur: Moteurs Leroy-Somer, 16915 Angouleme (FR)
(72) Inventeur: MCCLELLAND, Michael Leo, 16430 CHAMPNIERS (FR); COUPART, Eric, 16000 ANGOULEME (FR); CHASSARA, Thierry, 16430 BALZAC (FR)
(74) Mandataire: Cabinet Nony

(57) **Abrégé**

Machine électrique tournante (1), comportant un stator (10) logé dans un carter (20), le stator (10) comportant une masse statorique (11) formée d'un empilement de tôles (12) de stator, les tôles (12) étant de forme générale non circulaire et étant décalées angulairement les unes par rapport aux autres, de manière à ménager des espaces (15) avec le carter (20), le carter (20) comportant des conduits (25) pour la circulation d'un liquide de refroidissement, et lesdits espaces (15) étant également utilisés pour la circulation du liquide de refroidissement.

## Description

### Domaine technique

La présente invention concerne les machines électriques tournantes et plus particulièrement le refroidissement de telles machines. Il peut notamment s'agir de générateurs électriques ou de moteurs électriques.

### Technique antérieure

La demande internationale WO 95/35592 et le brevet US 5 698 925 portent sur des machines ouvertes comportant des tôles de stator décalées angulairement par rapport à une tôle adjacente suivante. Ces machines sont refroidies avec une circulation d'air.

WO 2021/018831 divulgue un stator comportant des tôles sur lesquels sont ménagés des passages de refroidissements connectés axialement aux canaux de connexion d'un dispositif d'introduction de liquide de refroidissement. Ce dernier est moulé en une seule pièce avec le carter.

US 2012/080983 divulgue une masse statorique comportant des passages hélicoïdaux permettant la circulation d'un liquide de refroidissement entre une entrée et une sortie de liquide de refroidissement.

US 2012/267970 divulgue également une machine électrique comportant une masse statorique ménageant des canaux de circulation de fluide de refroidissement entre une entrée et une sortie du liquide située sur le carter.

US 1 882 487 divulgue une machine refroidie à l'air comportant des tôles statoriques de forme polygonales décalées pour créer des conduits de ventilation.

EP 3 511 223 divulgue une machine comportant des conduits de liquide de refroidissement.

Il existe un besoin pour améliorer le refroidissement de telles machines.

### Résumé de l'invention

L'invention a ainsi pour objet, selon l'un de ses aspects, une machine électrique tournante, comportant un stator logé dans un carter,
le stator comportant une masse statorique formée d'un empilement de tôles de stator, les tôles du stator étant de forme générale non circulaire et étant décalées angulairement les unes par rapport aux autres, de manière à ménager des espaces avec le carter,
le carter comportant des conduits pour la circulation d'un liquide de refroidissement, et lesdits espaces étant également utilisés pour la circulation du liquide de refroidissement.

Le liquide de refroidissement peut circuler dans le carter, notamment dans les conduits de celui-ci prévus à cet effet, ainsi qu'entre le carter et la masse statorique, dans les espaces ménagés entre le carter et les tôles.

Grâce à l'invention, il est possible d'optimiser le refroidissement de la machine électrique tout en augmentant sensiblement le passage du flux magnétique et en diminuant les coûts de fabrication.

Pour de telles machines refroidies par une circulation de liquide de refroidissement, on peut parler de machines fermées. Celles-ci ne sont pas refroidies directement par l'air ambiant mais par un fluide de refroidissement, généralement sous forme liquide, circulant au sein d'un carter en contact physique avec le stator et refroidissant celui-ci.

Dans une machine à fluide de circulation fermée, le fluide de circulation ne ressort pas de la machine. Une telle machine fermée peut en outre être refroidie en plus par une circulation d'air.

Une telle circulation peut être étanche. L'étanchéité peut être obtenue par une fermeture étanche entre le carter et la masse statorique. Cette étanchéité peut être obtenue au moyen d'une résine et/ou par l'ajout de pièces spécifiques, de préférence conductrices thermiques, autour de l'extrémité du bobinage.

L'interface entre la masse statorique et le carter permet de favoriser de meilleurs échanges thermiques avec le liquide de refroidissement. En effet, les tôles elles-mêmes peuvent servir également à l'évacuation de la chaleur. En outre, le décalage angulaire des tôles peut permettre d'augmenter la surface de contact entre les tôles et le liquide de refroidissement, et ainsi de favoriser les échanges de chaleur avec le liquide de refroidissement. Le procédé d'assemblage des tôles du stator permet d'assurer l'étanchéité entre chaque tôle.

Dans un mode de réalisation, les conduits s'étendent parallèlement à l'axe de la machine. De préférence, les conduits s'étendent au moins sur une partie, de préférence une majorité de la longueur de la masse statorique. Les conduits peuvent s'étendre tout au long de la longueur de la masse statorique. Dans un mode de réalisation, les conduits sont rectilignes.

Dans un mode de réalisation, les conduits se situent radialement extérieur à la masse statorique, notamment extérieur aux espaces ménagés entre la masse statorique et le carter pour la circulation du liquide de refroidissement.

La machine comporte dans un mode de réalisation au moins un flasque d'extrémité comportant des passages pour la circulation d'un liquide de refroidissement. Ladite circulation dans le flasque est de préférence en communication fluidique avec les conduits du carter. Le liquide de refroidissement circule en circuit fermé entre le flasque et les conduits.

### Exposé de l'invention

### Tôles

Les tôles peuvent être décalées une à une ou en variante par groupe de deux tôles ou plus. Les groupes peuvent comporter deux tôles ou plus de deux tôles.

Des tôles décalées les unes par rapport aux autres ne se superposent pas exactement suite au décalage angulaire.

Les tôles peuvent être décalées d'un angle α qui peut être constant d'une tôle à l'autre ou d'un groupe de tôles à l'autre. La mesure de cet angle peut être sensiblement différente d'un multiple de 45°. La mesure de cet angle α peut être une fraction d'un multiple de 360° et on peut en outre choisir cette mesure de sorte que cette mesure de l'angle, exprimée en degrés, soit un multiple de 360/N, où N est le nombre d'encoches du stator, afin d'obtenir des encoches stator alignées de manière rectiligne selon l'axe de rotation.

En variante ou additionnellement, le décalage angulaire peut dépendre de la polarité de la machine.

Une telle configuration permet, en dépit de la disposition en quinconce des tôles de la masse statorique, d'assurer que les encoches du stator restent bien alignées entre elles.

En variante, l'angle peut être légèrement différent d'un multiple de 360°/N, notamment dans le cas où l'on cherche à créer une légère inclinaison des encoches stator par rapport à l'axe de rotation du moteur, l'objectif étant de réduire l'oscillation du couple moteur sur un tour de rotation. Typiquement, le décalage d'alignement des encoches entre chaque tôle peut permettre d'obtenir un décalage angulaire entre la première et la dernière tôle du stator inférieur à deux fois 360°/N, de préférence une fois 360°/N. Dans ce cas préféré, si un stator est constitué d'un empilage de n tôles, le décalage angulaire des encoches entre chaque tôle pourrait être un multiple de (360°/N^{∗}(1+1/n).

Par ailleurs, grâce à l'invention, l'encombrement total de la machine peut être réduit.

On peut avantageusement automatiser le cas échéant l'assemblage des tôles de la masse statorique.

Enfin, grâce à la disposition des tôles, on peut utiliser des tôles de faible épaisseur sans affecter la solidité du stator, ce qui permet d'améliorer les performances magnétiques de la machine.

Les tôles peuvent être de forme sensiblement polygonale, notamment de polygone régulier, par exemple de carré ou d'hexagone. Les tôles présentent ainsi des côtés rectilignes, par exemple quatre côtés rectilignes, ou en variante six. Des variantes peuvent exister avec des formes non rectilignes.

Les tôles peuvent avoir des coins tronqués, notamment selon un contour d'arc de cercle. L'arc de cercle peut être centré sur l'axe de rotation de la machine. Le rayon de l'arc de cercle peut être le même pour chaque coin d'une tôle et pour toutes les tôles de la masse statorique.

Chaque tôle peut par exemple avoir quatre coins tronqués, ou en variante six ou plus.

Pour chaque coin des tôles, le rayon de l'arc de cercle peut être sensiblement supérieur au rayon du cercle géométriquement inscrit dans le pourtour carré des tôles. De plus, ce rayon est suffisamment faible pour que sur deux tôles consécutives quelconques, les arcs de cercle homologues se prolongent ou se superposent et constituent un arc de cercle sensiblement continu en vue axiale du stator, c'est-à-dire en projection sur un plan perpendiculaire à l'axe de rotation de la machine.

Les tôles de la masse statorique peuvent être reliées à au moins une tôle adjacente, voire à chacune des deux tôles adjacentes, par un cordon de soudure. Le cordon de soudure peut notamment être ménagé sur au moins un des coins tronqués des tôles, par exemple un coin tronqué sur deux. Une telle configuration permet d'améliorer leur maintien et de renforcer mécaniquement la structure de la masse statorique.

Le nombre de cordons de soudure peut être un multiple de 360/N, où N est le nombre d'encoches du stator.

Il est possible d'obtenir des cordons de soudure continus dans certaines configurations angulaires. Dans un mode de réalisation, le nombre de cordons de soudure peut par exemple être de 8, tous les 45°, pour un stator à 72,48, 36 ou 24 encoches. Pour un stator dont le nombre d'encoches n'est pas divisible par 4, comme par exemple pour un stator à 54 encoches, trouver une ligne continue ne peut se faire que sur un diamètre proche du diamètre magnétique du moteur ou en ajoutant des encoches externes pour atteindre un diamètre commun sur certaines lignes pour toutes les positions de tôles.

Les tôles de la masse statorique peuvent être revêtues d'un revêtement protecteur, notamment un vernis ou une colle. Un tel revêtement permet de leur éviter tout risque de corrosion, notamment qui serait dû à un contact avec le liquide de refroidissement. La surface extérieure des tôles de la masse statorique est ainsi bien protégée de la corrosion.

Dans une variante de réalisation, les tôles peuvent être collées entre elles. La colle peut de préférence être appliquée de manière homogène.

Par ailleurs, le revêtement des tôles peut permettre d'assurer une bonne étanchéité entre les tôles, et d'éviter toute fuite de liquide de refroidissement vers le rotor, à travers le stator, et notamment entre les tôles.

Une variante de réalisation peut être la fusion d'un revêtement pré-déposé sur les tôles. Une variante de réalisation peut consister à procéder à un trempé de l'ensemble du paquet de tôles dans un liquide suivi d'un séchage ou polymérisation, ou bien projection d'un revêtement.

### Carter

Le carter peut comporter une chemise extérieure et une chemise intérieure entre lesquelles sont ménagés les conduits pour le liquide de refroidissement, ou bien une seule chemise extérieure, le liquide circulant entre la masse statorique et la chemise extérieure.

Le carter peut être réalisé par moulage, par injection sous pression d'un métal léger ou de matière plastique renforcées de fibres, ou en variante à partir d'une tôle découpée, roulée, soudée et/ou emboutie.

Le liquide de refroidissement peut être de l'eau glycolée. En variante, le liquide de refroidissement peut être choisi dans la liste suivante, qui n'est pas limitative : tout type d'huile de réducteur, de moteur thermique ou liquide de frein par exemple.

Le stator peut comporter un bobinage, lequel peut être disposé sur des dents de l'empilement de tôles magnétiques. Le bobinage peut comporter des bobines, chaque bobine étant disposée sur une dent, le bobinage étant alors dit « concentré ». En variante, les bobines peuvent entourer plusieurs dents consécutives ou non, le bobinage étant alors dit « distribué ». En variante encore, le bobinage peut comporter des épingles en U ou en I.

Le bobinage du stator peut être noyé dans une résine.

La résine peut être choisie dans la liste suivante, qui n'est pas limitative : résines époxy, polyuréthanes, à plusieurs composants, chargées ou non de poudres ou fibres améliorant les performances désirées, par exemple pour améliorer le transfert thermique, la tenue sur une plage de température donnée, l'apparition de décharges partielles ou la tenue mécanique et l'étanchéité La résine peut être choisie de façon à ce que son poids n'impacte que modérément le poids total de la machine. La résine peut être choisie de façon à ce que sa température de transition vitreuse soit compatible avec la température maximale de la machine, afin d'éviter une augmentation trop importante du coefficient de dilatation des têtes de bobines.

La présence de résine peut également permettre de réduire la résistance aux vibrations.

Par ailleurs, la résine recouvrant le bobinage peut également venir fermer les espaces entre la masse statorique et le carter, et ains assurer son étanchéité et éviter toute fuite de liquide de refroidissement.

Dans un mode de réalisation, le bobinage est entièrement recouvert par la résine.

En variante, le bobinage peut ne pas être entièrement recouvert par la résine, notamment une partie du bobinage faisant face au rotor et la plus éloigné d'un plan central de la machine, perpendiculaire à l'axe de rotation. Cette partie du bobinage peut rester exposé à un gaz présent dans la machine, notamment exposée à un gaz de refroidissement qui sera décrit plus loin.

La machine peut comporter une bague de conduction, notamment en aluminium, disposée entre le bobinage du stator et le carter. La bague de conduction peut permettre de favoriser la conduction thermique entre le bobinage et le carter, et ainsi permettre d'améliorer l'évacuation de la chaleur produite dans le bobinage du stator.

Par ailleurs, la bague de conduction peut permettre de favoriser l'étanchéité de la circulation de liquide de refroidissement, et d'éviter des fuites vers le bobinage.

La bague de conduction peut avoir une épaisseur réduite, de manière à laisser de l'espace pour loger un circuit ménageant un passage pour le liquide de refroidissement autour du bobinage, comme décrit ci-après.

La machine peut comporter une feuille isolante disposée entre la bague de conduction et le bobinage. Il s'agit ici d'isolation électrique.

La machine peut comporter un manchon de séparation disposé entre le bobinage du stator et le rotor. Ce manchon de séparation peut être fixé au stator. Il peut être placé dans l'entrefer. Il peut permettre d'empêcher des fuites éventuelles vers le rotor, ainsi que des fuites d'huile lubrifiante.

La machine peut comporter en outre au moins un circuit ménageant un passage pour le liquide de refroidissement autour du bobinage, notamment au niveau des têtes de bobines. Une telle configuration permet d'améliorer encore le refroidissement du bobinage du stator.

### Refroidissement par un gaz de refroidissement

Le circuit précité peut comporter au moins une ailette configurée pour renvoyer un gaz de refroidissement vers un rotor de la machine. L'ailette peut être moulée d'un seul tenant avec le circuit, ou rapportée sur celui-ci. L'ailette est statique, lors du fonctionnement de la machine. L'ailette permet d'assurer un échange thermique entre le gaz de refroidissement et le liquide de refroidissement, et de favoriser ainsi le refroidissement global de la machine.

Le carter peut ménager un espace intérieur de la machine. L'espace intérieur du carter peut loger le stator et le rotor de la machine.

L'espace intérieur de la machine peut être configuré pour être mis sous pression.

En variante, le carter peut ménager un espace intérieur, lequel est dépourvu de mise sous pression. Il peut notamment être placé à la pression ambiante.

L'espace intérieur de la machine peut être rempli d'air, ou en variante d'un autre gaz ambient. Le gaz présent dans l'espace intérieur de la machine peut être de l'air, de l'azote ou autre gaz neutre, cette liste n'étant pas limitative.

La machine peut comporter en outre un rotor. Le rotor peut être à aimants permanents, disposés en surface d'une masse rotorique ou insérer circonférentiellement ou radialement dans celle-ci, ou étant disposés en U, en V ou en W, en une ou plusieurs couches.

En variante, le rotor peut être bobiné, ou en variante encore il peut être à cage d'écureuil.

Le rotor peut comporter un nombre de pôle par exemple compris entre 2 et 78, pouvant par exemple aller au-delà de 64 pôles, ou étant compris entre 4 et 12, étant par exemple de 6 ou 8.

Le rotor peut être dépourvu de tout système propre de refroidissement, ce qui peut ne pas être gênant dans la mesure où les pertes thermiques au niveau du rotor peuvent rester faibles.

En variante, le rotor peut ménager un circuit de refroidissement intérieur avec au moins un passage aller et au moins un passage retour, pour le passage d'un gaz de refroidissement.

Le gaz de refroidissement peut être de l'air ou un autre gaz mentionné ci-dessus, présent dans l'espace intérieur de la machine.

La machine peut comporter un ventilateur interne, lequel est notamment disposé sur un arbre de la machine ou sur le rotor, notamment d'un côté du stator et du rotor, dans l'espace intérieur de la machine. Le ventilateur interne permet la circulation du gaz de refroidissement dans l'espace intérieur de la machine.

Le ventilateur interne peut être séparé du rotor, étant disposé sur l'arbre à une certaine distance du rotor, ou en variante il peut être disposé sur le rotor, notamment sur une masse rotorique du rotor. Il peut par exemple comporter des ailettes disposées sur une plaque d'extrémité d'une masse rotorique du stator.

### Flasque d'extrémité

La machine peut comporter au moins un flasque d'extrémité, voire deux flasques d'extrémité. Les flasques d'extrémité sont placés aux extrémités axiales du carter.

Au moins un flasque peut comporter des passages pour la circulation d'un liquide de refroidissement. Ladite circulation dans le flasque peut être en communication fluidique avec les conduits du carter. Ils peuvent être reliés entre eux par des tuyaux extérieurs au carter et au flasque.

La machine peut comporter un unique flasque comportant des passages pour la circulation d'un liquide de refroidissement. L'autre flasque peut être dépourvu de tels passages. Le flasque dépourvu des passages peut être situé du même côté du stator que le ventilateur susmentionné, et le flasque comportant les passages peut être situé du côté opposé du stator.

Au moins un flasque, notamment le flasque comportant les passages pour la circulation d'un liquide de refroidissement, peut comporter un voile de matière permettant de réorienter le gaz de refroidissement provenant du passage aller du rotor vers le passage retour du rotor. Le voile de matière peut être moulé d'un seul tenant avec le flasque, ou rapporté sur celui-ci. Le voile de matière est statique, lors du fonctionnement de la machine.

La machine peut comporter un redresseur fixé au flasque, notamment au flasque comportant les passages pour la circulation d'un liquide de refroidissement, configuré pour guider le gaz de refroidissement provenant du passage aller du rotor vers le voile de matière. Le redresseur peut être moulé d'un seul tenant avec le flasque, ou rapporté sur celui-ci. Il peut être fabriqué par moulage, fonderie, ou encore par fabrication additive. Le redresseur est statique, lors du fonctionnement de la machine.

Le gaz de refroidissement peut être aspiré dans le passage retour du rotor par l'action du ventilateur situé de l'autre côté du rotor.

La machine électrique peut être un moteur ou un générateur.

La machine n'est pas limitée à une gamme de tension ou à un type de bobinage, ni à une gamme de puissance ou à une gamme de vitesse. La machine peut par exemple permettre de développer une puissance supérieure à 100kW, avec une vitesse de rotation supérieure à 10 000 tours/min. La puissance et la vitesse peuvent bien entendu être inférieures à ces valeurs.

### Brève description des dessins

L'invention pourra être mieux comprise à la lecture de la description détaillée qui va suivre, d'exemples de mise en œuvre non limitatifs de celle-ci, et à l'examen du dessin annexé, sur lequel :
[Fig 1] la figure 1 est une vue en coupe longitudinale, schématique et partielle, d'une machine conforme à l'invention,
[Fig 2] la figure 2 est une vue en coupe transversale, schématique et partielle, de la machine de la figure 1,
[Fig 3] la figure 3 est une vue similaire à la figure 1 d'une variante de réalisation,
[Fig 4] la figure 4 est une vue en coupe transversale, schématique et partielle, de la machine de la figure 3,
[Fig 5] la figure 5 est une vue similaire à la figure 1 d'une variante de réalisation,
[Fig 6] la figure 6 est une vue similaire à la figure 1 d'une variante de réalisation,
[Fig 7] la figure 7 est une vue en coupe transversale, schématique et partielle, de la machine de la figure 6.

### Description détaillée

Dans la suite de la description, les éléments identiques ou de fonctions identiques portent le même signe de référence. A des fins de concision de la présente description, ils ne sont pas décrits en regard de chacune des figures, seules les différences entre les modes de réalisation étant décrites. Sur les figures, les proportions réelles n'ont pas toujours été respectées, dans un souci de clarté.

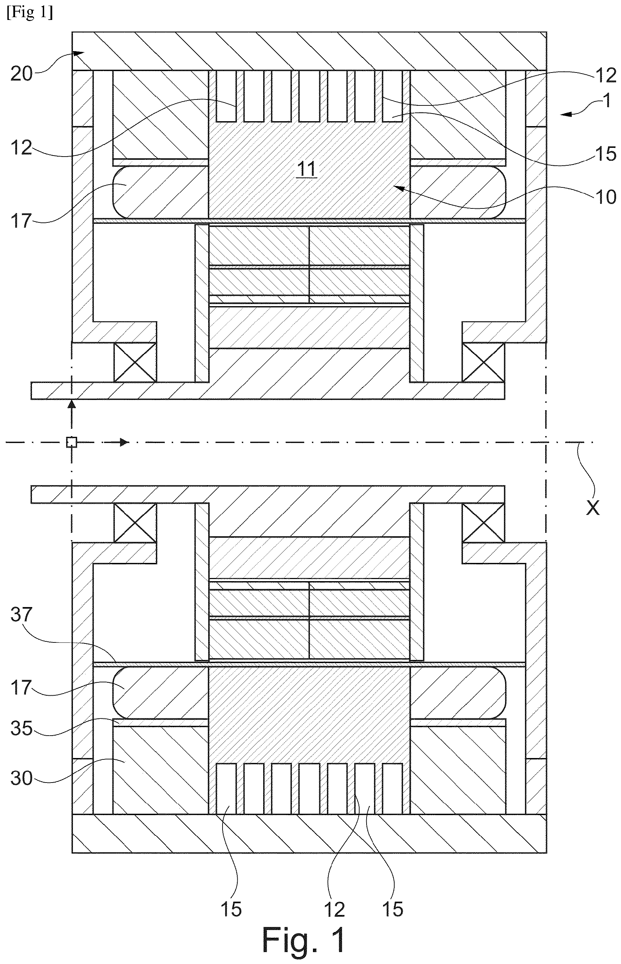

On a illustré à la figure 1 un premier exemple de machine électrique tournante selon l'invention. La machine 1 comporte un rotor 40, un stator 10 et un carter 20 s'étendant selon un axe longitudinal X de rotation de la machine. Elle est refroidie par la circulation d'un liquide de refroidissement.

Le carter 20 ménage un espace intérieur dans lequel sont logés le stator 10 et le rotor 40. Le carter comporte une chemise extérieure 21 et une chemise intérieure 22 entre lesquelles sont ménagés des conduits 25 pour le liquide de refroidissement. Le liquide de refroidissement est dans cet exemple de l'eau glycolée.

Le stator 10 comporte une masse statorique 11 formée d'un empilement de tôles 12 de stator, les tôles 12 du stator 10 étant de forme générale non circulaire et étant décalées angulairement les unes par rapport aux autres, de manière à ménager des espaces 15 avec le carter, comme visible sur la figure 1.

Les tôles peuvent être décalées une à une ou en variante par groupe de deux tôles ou plus. Les groupes peuvent comporter deux tôles ou plus de deux tôles.

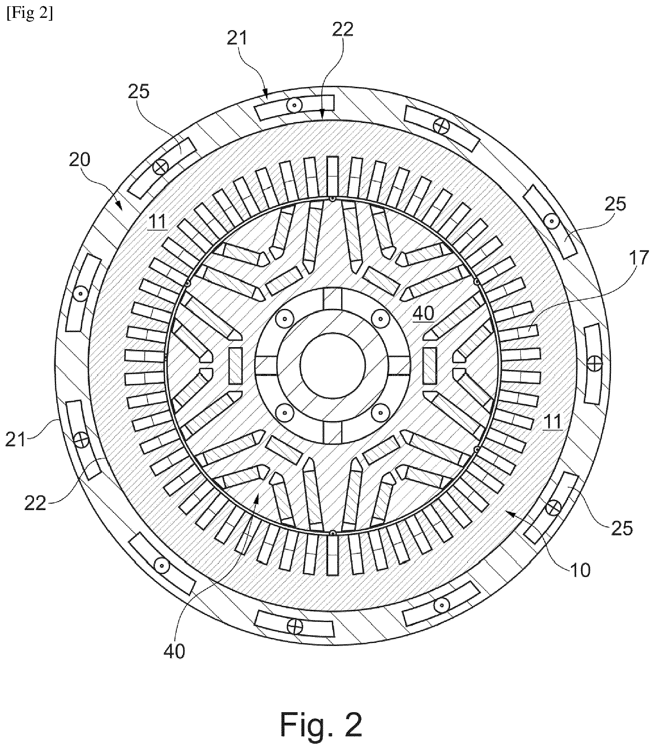

On assure en outre que, en dépit de la disposition en quinconce des tôles de la masse statorique 11, les encoches du stator restent bien alignées entre elles, comme illustré sur la figure 2.

Par ailleurs, les tôles 12 sont revêtues d'un revêtement protecteur, notamment un vernis ou une colle, ce qui permet de leur éviter tout risque de corrosion, notamment qui serait dû à un contact avec le liquide de refroidissement, ainsi que de permettre d'assurer une bonne étanchéité entre les tôles, et d'éviter toute fuite de liquide de refroidissement vers le rotor, à travers le stator, et notamment entre les tôles 12.

Les espaces 15 du stator 10 sont également utilisés pour la circulation du liquide de refroidissement. Ainsi, le liquide de refroidissement peut circuler dans le carter 20, notamment dans les conduits 25 de celui-ci prévus à cet effet, ainsi qu'entre le carter 20 et la masse statorique 11, dans les espaces 15 ménagés entre le carter 20 et les tôles 12.

Une telle circulation est étanche. L'étanchéité peut être obtenue par une fermeture étanche entre le carter et la masse statorique.

Par ailleurs, le stator comportant un bobinage 17 qui est noyé dans une résine.

La machine comporte en outre une bague de conduction 30, ici en aluminium, disposée entre le bobinage 17 du stator et le carter 20, qui permet de favoriser la conduction thermique entre le bobinage 17 et le carter 20, et ainsi permettre d'améliorer l'évacuation de la chaleur produite dans le bobinage du stator. Par ailleurs, la bague de conduction 30 permet également de favoriser l'étanchéité de la circulation de liquide de refroidissement, et d'éviter des fuites vers le bobinage 17.

La machine comporter également une feuille isolante 35 disposée entre la bague de conduction 30 et le bobinage 17. Il s'agit ici d'isolation électrique.

Enfin, la machine comporte un manchon de séparation 37 disposé entre le bobinage du stator et le rotor, fixé au stator. Ce manchon de séparation 37 permet d'empêcher des fuites éventuelles vers le rotor, ainsi que des fuites d'huile lubrifiante.

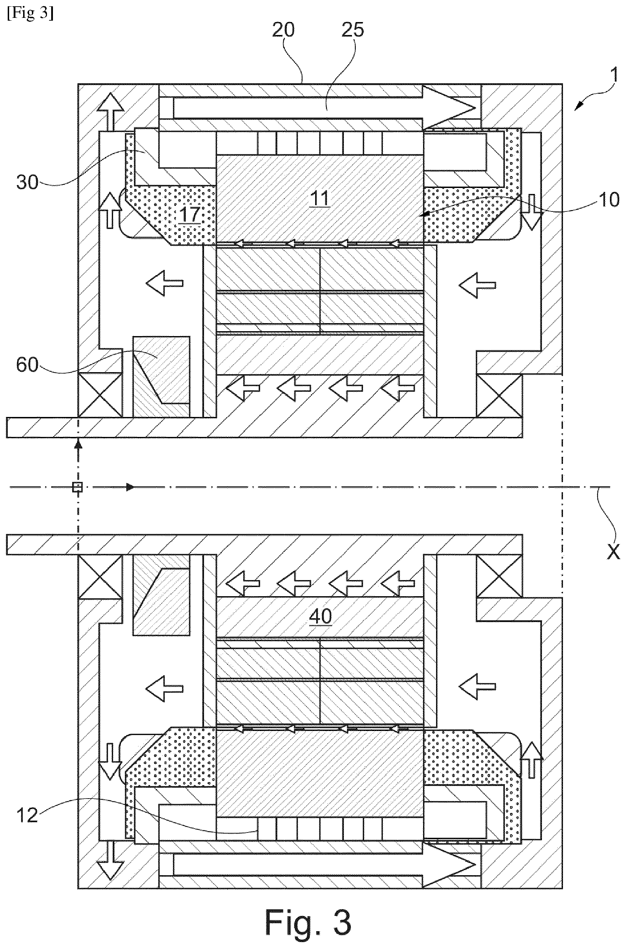

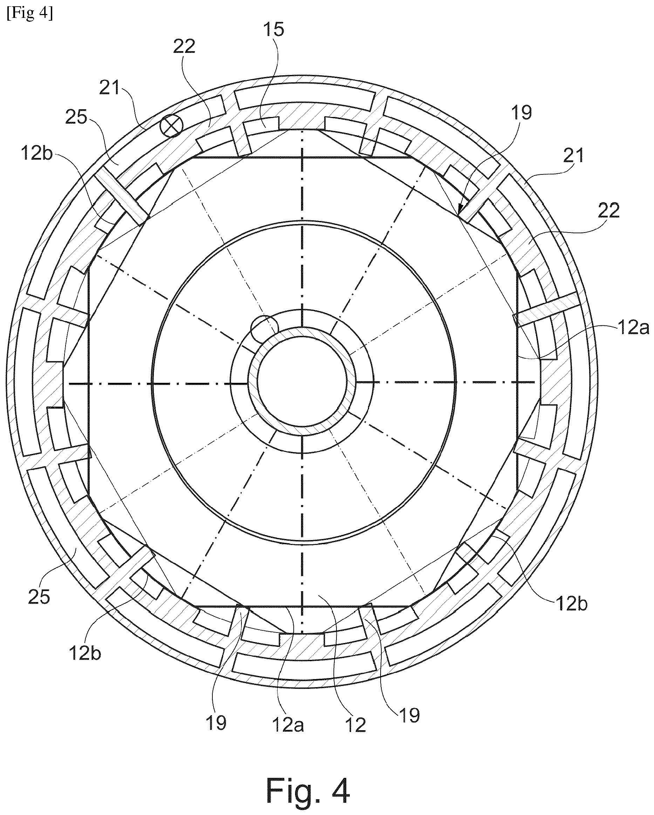

La résine recouvrant le bobinage peut également venir fermer les espaces entre la masse statorique et le carter, et ainsi assurer son étanchéité et éviter toute fuite de liquide de refroidissement, comme illustré dans le mode de réalisation des figures 3 et 4.

Dans ce mode de réalisation des figures 3 et 4, le bobinage n'est pas entièrement recouvert par la résine. Il y a une partie non recouverte, à savoir la partie du bobinage faisant face au rotor et la plus éloigné d'un plan central de la machine, perpendiculaire à l'axe de rotation X. Cette partie du bobinage peut rester exposé à un gaz présent dans la machine, notamment exposée à un gaz de refroidissement qui sera décrit plus loin.

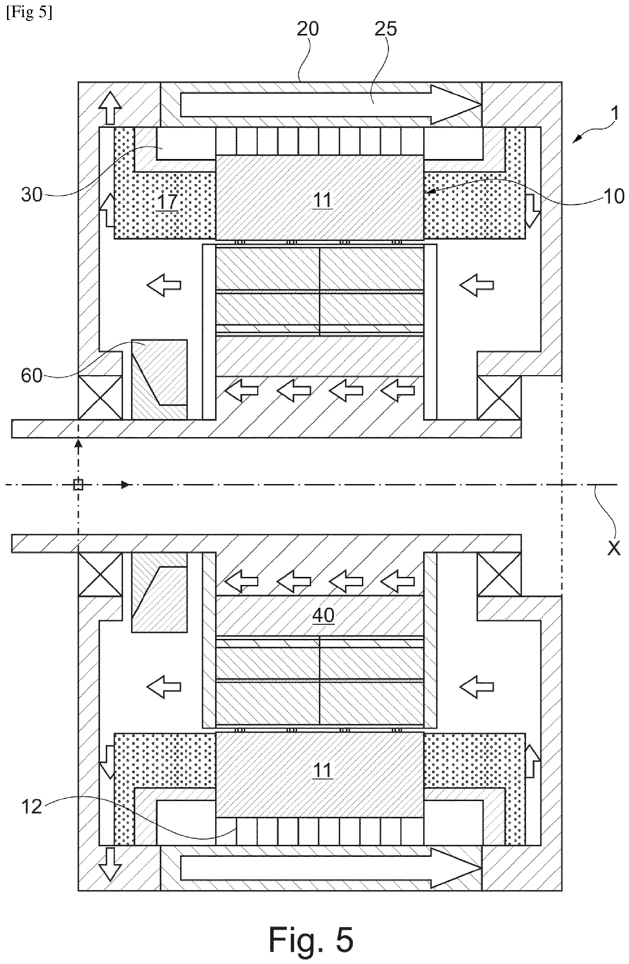

En variante, comme illustré à la figure 5, le bobinage est entièrement recouvert par la résine.

Dans l'exemple des figures 3 et 4, l'espace intérieur du carter est configuré pour être mis sous pression. En revanche, dans l'exemple de la figure 5, le carter ménage un espace intérieur, lequel est dépourvu de mise sous pression. Il peut notamment être placé à la pression ambiante. L'espace intérieur de la machine peut notamment être rempli d'air.

Dans les deux exemples des figures 3, 4 et 5, la machine comporte un ventilateur interne 60, lequel est disposé sur un arbre de la machine, à distance du rotor 40, d'un côté du stator et du rotor, dans l'espace intérieur de la machine. Le ventilateur interne 60 permet la circulation du gaz de refroidissement dans l'espace intérieur de la machine.

Par ailleurs, dans l'exemple décrit à la figure 4, les tôles sont de forme sensiblement polygonale, en forme de carré, avec quatre côtés rectilignes 12a, et quatre coins tronqués 12b, qui ont un contour d'arc de cercle. L'arc de cercle est centré sur l'axe de rotation de la machine. Le rayon de l'arc de cercle est ici le même pour chaque coin d'une tôle et pour toutes les tôles de la masse statorique.

Pour chaque coin des tôles, le rayon de l'arc de cercle est sensiblement supérieur au rayon du cercle géométriquement inscrit dans le pourtour carré des tôles. De plus, ce rayon est suffisamment faible pour que sur deux tôles consécutives quelconques, les arcs de cercle homologues se prolongent ou se superposent et constituent un arc de cercle sensiblement continu en vue axiale du stator, c'est-à-dire en projection sur un plan perpendiculaire à l'axe de rotation de la machine, comme visible à la figure 4.

Par ailleurs, les tôles de la masse statorique sont reliées à chacune des deux tôles 12 adjacentes par des cordons de soudure 19, afin d'améliorer leur maintien et de renforcer la structure de la masse statorique 11. Dans ce mode de réalisation des figures 3 et 4, le nombre de cordons de soudure est de 12, tous les 30°, pour un stator à 48 encoches.

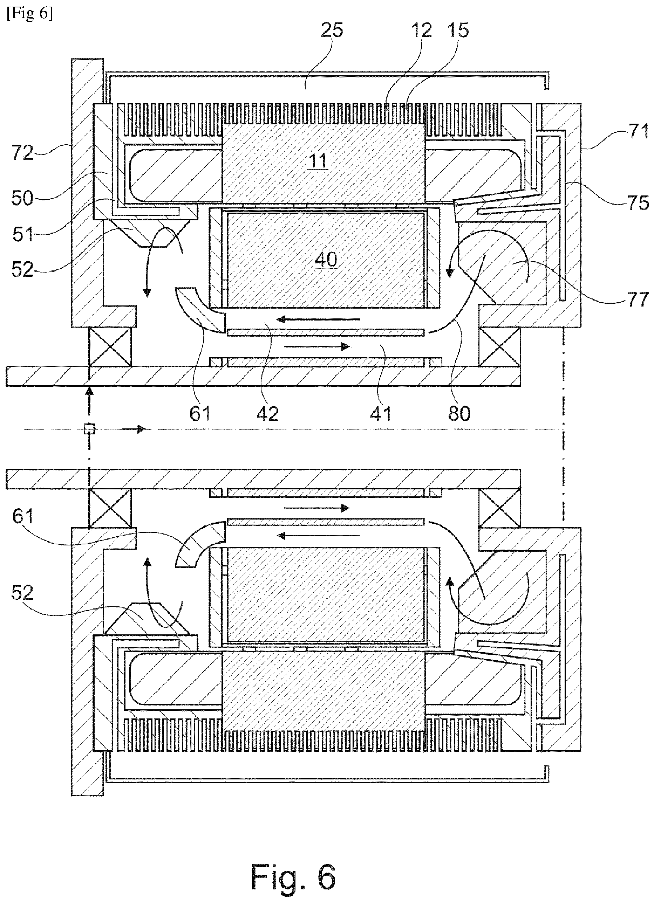

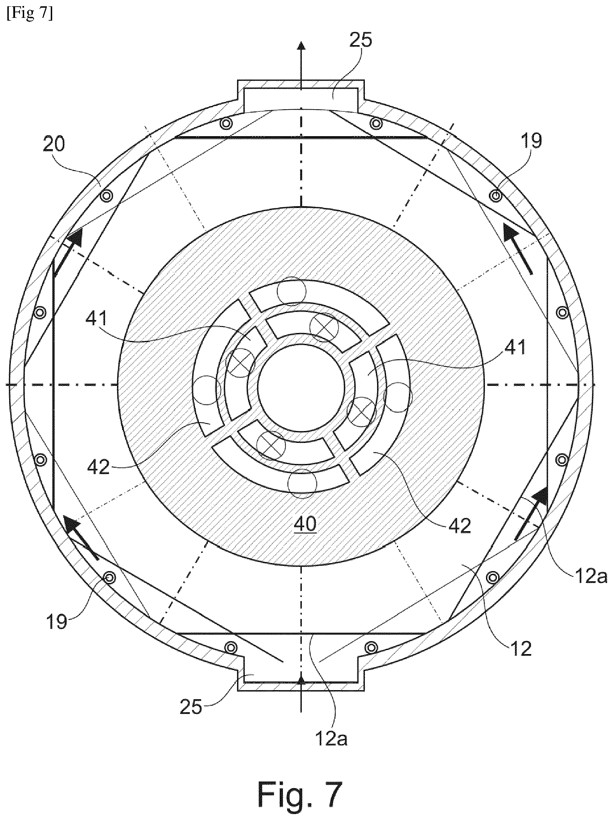

On a illustré aux figures 6 et 7 une autre variante de réalisation, dans laquelle la bague de conduction 30 a une épaisseur réduite, de manière à laisser de l'espace pour loger un circuit 50 ménageant un passage 51 pour le liquide de refroidissement autour du bobinage 17. Ce circuit 50 est ménagé au niveau des têtes de bobines, afin d'améliorer encore le refroidissement du bobinage du stator.

Le circuit 50 comporte également des ailettes 52 statiques, configurées pour renvoyer un gaz de refroidissement vers le rotor 40 de la machine. Les ailettes 52 permettent d'assurer un échange thermique entre un gaz de refroidissement et le liquide de refroidissement, et de favoriser ainsi le refroidissement global de la machine.

Par ailleurs, comme illustré aux figures 6 et 7, la machine comporte un rotor 40, qui ménage un circuit de refroidissement intérieur avec des passages aller 41 et des passages retour 42, pour le passage d'un gaz de refroidissement. Le gaz de refroidissement peut être de l'air.

Le ventilateur interne 60 comporte dans cet exemple des ailettes 61 disposées sur une plaque d'extrémité d'une masse rotorique du stator.

La machine comporte également deux flasques d'extrémité 71, 72, placés aux extrémités axiales du carter 20.

Le flasque d'extrémité 71 comporte dans cet exemple des passages 75 pour la circulation du liquide de refroidissement. La circulation dans le flasque 71 est en communication fluidique avec les conduits 25 du carter 20, comme illustré.

L'autre flasque 72 est dépourvu de tels passages. Le flasque 72 dépourvu des passages est situé du même côté du stator que les ailettes 61 du ventilateur 60, et le flasque 71 comportant les passages 75 est situé du côté opposé du stator.

Le flasque 71 comportant les passages 75 pour la circulation du liquide de refroidissement comporte également un voile de matière 77 statique permettant de réorienter le gaz de refroidissement provenant du passage aller 41 du rotor vers le passage retour 42 du rotor.

Enfin, la machine comporte un redresseur 80 statique, fixé au flasque 71 comportant les passages 75, configuré pour guider le gaz de refroidissement provenant du passage aller 41 du rotor vers le voile de matière 77.

Le gaz de refroidissement peut être aspiré dans le passage retour 42 du rotor par l'action du ventilateur 60 situé de l'autre côté du rotor.

L'invention n'est pas limitée aux exemples qui viennent d'être décrits.

En particulier, le carter peut avoir une forme différente, par exemple carré, hexagonale ou octogonale.

Le stator peut comporter un nombre de conduits différent, par exemple compris entre 2 et 200.

## Revendications

1. Machine électrique tournante (1), comportant un stator (10) logé dans un carter (20),
le stator (10) comportant une masse statorique (11) formée d'un empilement de tôles (12) de stator, les tôles (12) étant de forme générale non circulaire et étant décalées angulairement les unes par rapport aux autres, de manière à ménager des espaces (15) avec le carter (20),
le carter (20) comportant des conduits (25) pour la circulation d'un liquide de refroidissement, et lesdits espaces (15) étant également utilisés pour la circulation du liquide de refroidissement.

2. Machine selon la revendication précédente, les tôles (12) étant de forme sensiblement polygonale, notamment de polygone régulier, par exemple de carré ou d'hexagone.

3. Machine selon la revendication précédente, les tôles (12) ayant des coins tronqués (12b), notamment selon un contour d'arc de cercle.

4. Machine selon l'une quelconque des revendications précédentes, les tôles (12) de la masse statorique (11) étant revêtues d'un revêtement protecteur, notamment un vernis ou une colle.

5. Machine selon l'une quelconque des revendications précédentes, le carter (20) comportant une chemise extérieure (21) et une chemise intérieure (22) entre lesquelles sont ménagés les conduits pour le liquide de refroidissement.

6. Machine selon l'une quelconque des revendications précédentes, le liquide de refroidissement étant de l'eau glycolée.

7. Machine selon l'une quelconque des revendications précédentes, le stator (10) comportant un bobinage (17) noyé dans une résine.

8. Machine selon la revendication précédente, le bobinage (17) n'étant pas entièrement recouvert par la résine, notamment une partie du bobinage faisant face au rotor et la plus éloigné d'un plan central de la machine, perpendiculaire à l'axe de rotation.

9. Machine selon l'une des deux revendications précédentes, comportant une bague de conduction (30), notamment en aluminium, disposée entre le bobinage (17) du stator (10) et le carter (20).

10. Machine selon l'une des trois revendications précédentes, comportant un manchon de séparation (37) disposé entre le bobinage du stator et le rotor.

11. Machine selon l'une quelconque des revendications précédentes, comportant en outre au moins un circuit (50) ménageant un passage (51) pour le liquide de refroidissement autour du bobinage (17), notamment au niveau des têtes de bobines.

12. Machine selon la revendication précédente, le circuit (50) comportant au moins une ailette (52) configurée pour renvoyer un gaz de refroidissement vers un rotor (40) de la machine.

13. Machine selon l'une quelconque des revendications précédentes, le carter (20) ménageant un espace intérieur de la machine, lequel est configuré pour être mis sous pression.

14. Machine selon la revendication précédente, la machine comportant un ventilateur interne (60), lequel est notamment disposé sur un arbre de la machine ou sur le rotor, notamment d'un côté du stator (10) et d'un rotor (40), dans l'espace intérieur de la machine (1).

15. Machine selon l'une quelconque des revendications précédentes, la machine comportant un rotor (40) ménageant un circuit de refroidissement intérieur avec au moins un passage aller (41) et au moins un passage retour (42), pour le passage d'un gaz de refroidissement.

16. Machine selon l'une quelconque des revendications précédentes, comportant au moins un flasque d'extrémité (71), voire deux flasques d'extrémité (71, 72), au moins un flasque (71) comportant des passages (75) pour la circulation d'un liquide de refroidissement.

17. Machine selon la revendication précédente, au moins un flasque (71), notamment le flasque comportant les passages pour la circulation d'un liquide de refroidissement, comportant un voile de matière (77) permettant de réorienter le gaz de refroidissement provenant du passage aller (41) du rotor vers le passage retour du rotor.

18. Machine selon la revendication précédente, la machine comportant un redresseur (80) fixé au flasque (71), notamment au flasque comportant les passages pour la circulation d'un liquide de refroidissement, configuré pour guider le gaz de refroidissement provenant du passage aller (41) du rotor vers le voile de matière (77).
